Europäisches Patentamt

European Patent Office

Office européen des brevets

(19)

(11)　EP 0 920 677 B1

(12)　FASCICULE DE BREVET EUROPEEN

(45) Date de publication et mention
de la délivrance du brevet:
**17.05.2000   Bulletin 2000/20**

(21) Numéro de dépôt: **97937638.1**

(22) Date de dépôt: **19.08.1997**

(51) Int Cl.⁷: **G06T 5/00**, G01C 11/02

(86) Numéro de dépôt international:
**PCT/FR97/01501**

(87) Numéro de publication internationale:
**WO 98/08193 (26.02.1998 Gazette 1998/08)**

(54) **PROCEDE ET DISPOSITIF DE RECONNAISSANCE AIR-SOL POUR EQUIPEMENT OPTRONIQUE**

VERFAHREN UND VORRICHTUNG ZUR LUFTERDE ERKENNUNG FÜR EINE ELEKTRONISCHE ANLAGE

METHOD AND DEVICE FOR AIR-GROUND RECOGNITION FOR OPTOELECTRONIC EQUIPMENT

(84) Etats contractants désignés:
**DE DK FR GB IT NL SE**

(30) Priorité: **23.08.1996  FR 9610402**

(43) Date de publication de la demande:
**09.06.1999   Bulletin 1999/23**

(73) Titulaire: **THOMSON-CSF**
**75008 Paris (FR)**

(72) Inventeur: **PEPIN, Christian,**
**Thomson-CSF S.C.P.I.**
**F-94117 Arcueil Cedex (FR)**

(74) Mandataire: **Lincot, Georges**
**THOMSON-CSF,**
**Propriété Intellectuelle,**
**Département Protection et Conseil,**
**TPI/PC,**
**13, av. du Prés. Salvador Allende**
**94117 Arcueil Cédex (FR)**

(56) Documents cités:
**EP-A- 0 145 249**　　**FR-A- 2 427 017**
**US-A- 4 689 748**　　**US-A- 4 802 757**
**US-A- 5 270 756**

EP 0 920 677 B1

## Description

L'invention se rapporte au domaine de la reconnaissance jour/nuit, et plus particulièrement à la reconnaissance air-sol réalisée par des équipements optroniques aéroportés. L'invention s'applique notamment à la reconnaissance ou à la prise de vues satellite/sol.

Les équipements de reconnaissance aéroportés existant actuellement sont basés sur l'utilisation de film photographique photosensible, dans des équipements à très grande longueur focale, ou bien sur l'utilisation de barrette de capteurs électroniques élémentaires, à lecture par transfert de charges CCD (initiales de "Charge Coupled Device") ou par circuit CMOS (initiales de "Complementary Metal Oxide Semiconductor"). Cette dernière technique est intégrée dans un équipement optronique. Seul ce type d'équipement permet une reconnaissance jour/nuit à haute résolution.

La visée se faisant latéralement par rapport au déplacement du porteur, l'analyse de l'image est effectuée classiquement selon deux modes :

- en mode dit "push-broom" (c'est-à-dire "pousse-balai" en terminologie anglo-saxonne) : dans le cas d'un équipement optronique, la barrette est orientée de façon que l'axe principal de son image sur le sol soit sensiblement perpendiculaire au vecteur vitesse de l'aéronef porteur. Ainsi, c'est le déplacement de l'avion qui effectue le balayage de l'image de la barrette de détecteurs ;
- en mode dit panoramique : l'image de la barrette sur le sol, projetée parallèlement au vecteur vitesse de l'avion, est balayée latéralement par rotation de la ligne de visée de l'équipement autour d'un axe parallèle au vecteur vitesse de l'avion ; les moyens de balayage sont le plus souvent constitués par un miroir mobile, servant également à la stabilisation de la ligne de visée grâce à des boucles d'asservissement gyroscopiques. Ils peuvent également être constitués par une plate-forme "deux axes" portant l'ensemble de l'équipement.

La comparaison entre ces deux modes conduit aux bilans suivants.

Le mode "push-broom" est plus simple à mettre en oeuvre et fournit une image directement exploitable ; il est cependant plus exposé aux défauts de stabilisation de la ligne de visée qui ont tendance à être plus importants dans ce mode.

Par ailleurs, les signaux de sortie d'une barrette de détection sont classiquement traités par post-intégration, par exemple en technologie à retard et intégration dite TDI (initiales de "Time and Delay Intégration"), qui permet d'accroître électroniquement la sensibilité de la barrette aussi bien en lumière visible de jour qu'en infrarouge pour fonctionner de nuit. La post-intégration pose des difficultés d'exploitation en mode "push-broom" du fait que, la prise de vue ne pouvant le plus souvent être effectuée à la verticale, la projection inclinée de la barrette et de ses capteurs élémentaires sur le sol est de dimension variable d'un bout à l'autre de la barrette.

De son côté, le mode panoramique conduit à une exploitation de l'image plus complexe, car celle-ci est formée de trapèzes qui, obtenus par intégration au cours de balayages aller ou retour, se recouvrent partiellement. Une motorisation de la ligne de visée de l'équipement est alors nécessaire pour effectuer ce balayage en plus de la stabilisation. Cependant, l'utilisation d'un détecteur en technologie TDI est compatible avec ce mode d'analyse.

Dans ces deux modes, les défauts provoqués par la dynamique de stabilisation, appelés ci-après « résidus de stabilisation », se traduisent par des pertes en résolution optique et par des défauts géométriques d'image pouvant la rendre inexploitable.

Plus récemment, des détecteurs matriciels bidimensionnels ont été utilisés à la place de barrettes. Le mode d'analyse mis en oeuvre avec ce type de détecteur consiste alors à couvrir la zone observée par un balayage du type panoramique, à l'aide de plusieurs expositions ou poses successives. Un recouvrement marginal des prises de vue permet classiquement un recalage électronique des images obtenues.

Cette solution impose que la ligne de visée soit immobilisée successivement sur chaque position pendant le temps de la pose de la matrice (typiquement 10 ms). Des performances élevées sur la qualité de la stabilisation de la ligne de visées sont donc nécessaires. De telles performances sont difficiles à atteindre et à maintenir.

De plus, le fait de capter une image entière, par poses successives du détecteur matriciel, ne permet pas d'obtenir mieux que la résolution spatiale imposée par l'échantillonnage du capteur. Il n'est, en effet, pas possible de réaliser d'entrelacements, et donc de respecter le critère d'échantillonnage de Shannon.

L'invention propose l'utilisation de matrices détectrices en reconnaissance aérienne avec un mode d'analyse particulier permettant d'éviter les inconvénients ci-dessus, en particulier les défauts d'image dus à la stabilisation et à l'échantillonnage.

Dans ce but, l'invention exploite de façon optimale le fait de disposer simultanément d'un grand nombre de capteurs, par utilisation d'une matrice de détection en mode de balayage panoramique quasi-continu, avec des prises de vue multiples et particulièrement rapides. L'approche optimale consiste alors à réaliser une reconstruction d'image en utilisant le résidu de stabilisation pour effectuer un sur-échantillonnage de l'image, et ainsi améliorer la résolution de l'équipement. Ainsi la solution proposée identifie et utilise à son avantage un inconvénient de l'art connu, à savoir le résidu de balayage, pour pallier les défauts optiques issus de ce résidu de balayage.

Plus précisément, l'invention a pour objet un procédé de reconnaissance air-sol pour équipement optronique muni d'une matrice de détection haute cadence à capteurs élémentaires sensibles dans le spectre infrarouge et fournissant des valeurs de luminance d'une zone d'observation au sol par un balayage panoramique de la zone en bandeaux aller et retour, caractérisé en ce qu'il consiste à effectuer une corrélation bidimensionnelle de décalage d'image élémentaire par localisation de zones de recouvrement de même niveau de luminance dans des images élémentaires successives fournies par un balayage panoramique de cette matrice, à stocker successivement ces corrélations d'image élémentaire, et à positionner les valeurs de luminance de chaque image élémentaire corrélée dans une mémoire de bandeau d'image reconstruit, la mémoire de bandeau possédant un pas de mémoire élémentaire égal à une fraction du pas de point-image de chaque image élémentaire.

Selon un mode particulier de réalisation, le nombre de zones de recouvrement est au moins égal à 4, le pas de mémoire élémentaire de la mémoire de bandeau est égal à la moitié du pas de point-image de chaque image élémentaire, et les valeurs de luminance adressées à une même zone de la mémoire de bandeau sont accumulées par sommation successive.

L'invention concerne également un dispositif de mise en oeuvre de ce procédé. Ce dispositif est basé sur l'utilisation d'une matrice détectrice dite "rapide", c'est-à-dire à haute cadence de lecture, par exemple 400 Hz, pour former des images élémentaires à haut taux de recouvrement.

Selon des formes particulières de réalisation, il est prévu un dispositif de stabilisation pour maintenir les images élémentaires du détecteur perpendiculairement à la trajectoire de l'aéronef, un organe pour effectuer un balayage de compensation permettant d'obtenir une immobilité du balayage global pendant les temps de pose, deux mémoires d'image pour intégrer les valeurs de luminance de deux images élémentaires successives, ou bien une seule mémoire d'image courante associée à une mémoire d'image de référence. Dans ce dernier cas, les valeurs de luminance de l'image de référence sont obtenues par un traitement particulier sur un ensemble de valeurs obtenues au cours du balayage.

D'autres caractéristiques et avantages de l'invention ressortiront de la description détaillée qui suit, en regard des figures annexées qui représentent, respectivement :

- la figure 1, le principe de mise en oeuvre d'un balayage de type panoramique applicable dans le cadre de l'invention;
- la figure 2, les courbes de balayages de ligne de visée obtenues dans le cas d'une conjugaison entre le balayage principal et un balayage compensateur;
- la figure 3, un exemple de corrélation bidimensionnelle entre deux images élémentaires successives mis en oeuvre par le procédé selon l'invention;
- la figure 4, une mémoire de bandeau d'image selon le procédé de l'invention;
- la figure 5, un dispositif de réalisation selon l'invention sous la forme d'un schéma synoptique;
- la figure 6, une variante de réalisation du dispositif selon l'invention.

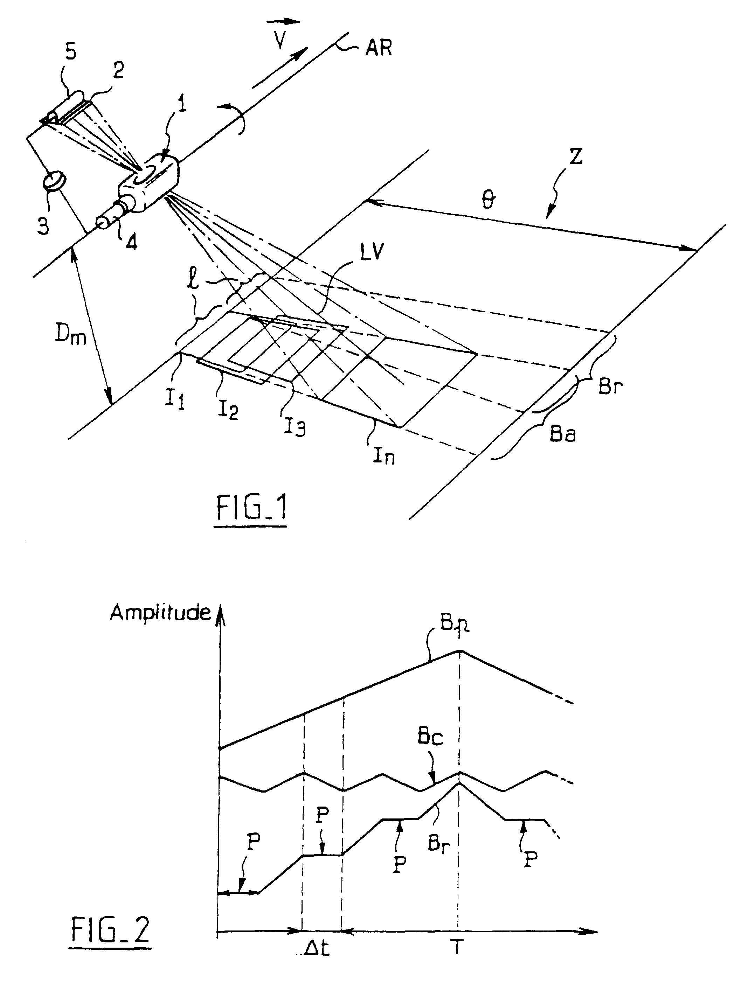

Certaines matrices infrarouges actuellement disponibles disposent de registre de lecture à cadence de sortie très élevée, par exemple égale à 400 Hz. Dans le cadre de l'invention et à l'aide d'une matrice de ce type, des poses successives à haute cadence peuvent être effectuées au cours d'un balayage panoramique dans le cadre de l'invention, tel qu'illustré à la figure 1 par exemple de réalisation.

Un tel balayage est effectué par oscillation d'un miroir de balayage d'un ensemble optique 1 autour de l'axe roulis AR de l'aéronef, parallèle au vecteur vitesse V de déplacement de cet aéronef. Le balayage est effectué à vitesse angulaire constante par rapport à un repère absolu et permet de balayer une zone Z au sol. L'ensemble optique 1 comporte un système optique qui projette l'image de la matrice de détection 2 sur la zone Z à observer. Les rayons extrêmes de cette projection sont indiqués en traits mixtes, la ligne de visée LV correspondant au rayon central de l'image.

Un dispositif de stabilisation 3 de la ligne de visée LV asservit la position du miroir de balayage selon deux axes orthogonaux. Pour obtenir une vitesse angulaire de balayage constante, le dispositif de stabilisation 3 transmet un signal de commande de ligne de visée au moteur d'entraînement 4 du miroir, pour maintenir constant le signal de sortie d'un gyromètre 5 solidaire de la matrice 2.

Avantageusement, la ligne de visée LV est commandée également dans le sens transversal pour compenser l'avancement de l'aéronef pendant chaque balayage aller $B_a$ ou retour $B_r$, indiqués en traits pointillés sur la figure 1. La trace au sol des images élémentaires $I_1$, $I_2$, $I_3$, ... $I_n$, formées lors des poses successives de prise de vue, est ainsi asservie pour rester perpendiculaire à la trajectoire de l'aéronef.

Préférentiellement , le temps de pose pendant lequel les capteurs élémentaires de la matrice de détection sont exposés sous forme de points-image afin de former une image élémentaire, est synchrone pour tous les points-image. De cette façon, la géométrie des images élémentaires successives obtenues par le mouvement de la ligne de visée est conservée. Ce temps de pose est également suffisamment faible pour ne pas réduire la résolution de l'image, du fait du déplacement de celle-ci pendant le temps d'intégration des charges des capteurs élémentaires libérés lors de l'exposition. Ce temps de pose est par exemple tel que le déplacement d'image correspondant ne dépasse pas une fraction de point-image, avantageusement entre un quart et un tiers.

Cependant, la vitesse de balayage, calculée pour que n'apparaissent pas de zones aveugles entre les bandeaux de balayage aller et retour, $B_a$ et $B_r$, reste élevée. Dans ces conditions, un balayage compensateur, permettant d'obtenir une immobilité du balayage global pendant les temps de pose, peut être avantageusement utilisé dans le cadre de l'invention.

L'exemple numérique suivant est significatif. Pour respecter la condition d'absence de zone aveugle, il suffit que le déplacement de l'avion porteur entre le début du balayage aller et le début du balayage retour soit inférieur ou égal à la largeur des bandeaux «l» à la distance minimale d'observation $D_m$. En tenant compte du rendement de balayage p du fait du retournement de la ligne de visée entre le balayage aller et retour, et de la longueur angulaire θ des bandeaux, un calcul simple montre que la vitesse de balayage v est liée à la vitesse V de l'avion par la relation :

$$v = \frac{\theta}{l.\rho} V$$

Dans le cas d'une matrice de 240 X 320 capteurs de 30 X 30 $\mu m^2$, d'un système optique de distance focale égale à 1 m, projetant une image élémentaire de dimensions $9,6.10^{-3}$ X $7,2.10^{-3}$ $rd^2$ à une distance minimale $D_m$ égale à 15 km, avec une vitesse d'avion égale à 300 m/s, une longueur angulaire de bandeau de 6 degrés soit 100 milliradians, et un rendement de balayage de 0,8, la vitesse de balayage est égale à 0,26 rd/s. Si la cadence de lecture de la matrice est de 400 Hz, avec une durée d'intégration des charges égale à 1,25 ms, le déplacement de la ligne de visée pendant cette durée d'intégration est près de 10 fois supérieure à la dimension du point-image.

Dans ces conditions, il est utile de ralentir la vitesse apparente de la ligne de visée pendant le temps de pose, en insérant dans le système optique un organe additionnel, un miroir ou une lame, afin d'effectuer un balayage compensateur de sens opposé au balayage principal.

La figure 2 indique les courbes d'amplitude angulaire en fonction du temps t, du balayage principal $B_p$ de la ligne de visée de demi-période T, d'un balayage compensateur $B_c$, et du balayage $B_r$ résultant du couplage des deux balayages précédents. Le balayage compensateur $B_c$ est, dans cet exemple de réalisation, de type en dents de scie. Il présente un front descendant de pente et de durée telles que les paliers P qui apparaissent sur le balayage résultant $B_r$, par addition des balayages pendant leur phase opposée, correspondent au temps de pose Δt. Lors du retour de balayage principal, les pentes des courbes $B_p$ et $B_r$ sont inversées. Les durées des fronts montant et descendant du balayage compensateur peuvent être adaptées en fonction des temps de pose et de la durée d'intégration des charges des capteurs élémentaires.

Selon l'invention, les images élémentaires, obtenues lors d'un balayage aller ou retour, sont traitées afin de reconstruire une image finale sous forme de bandeau rectiligne. Par exemple, en reprenant l'application numérique précédente, un balayage aller ou retour forme 154 images élémentaires dans un bandeau de 6° de longueur angulaire à reconstruire, chaque point du sol de la zone d'observation étant visualisé sur 11 images élémentaires différentes.

La reconstruction d'une image à partir de ces images élémentaires tient compte de la conjugaison entre le mouvement de balayage principal et les mouvements aléatoires dûs aux résidus de stabilisation. Le procédé selon l'invention utilise ces résidus en déterminant leur effet par corrélations successives, ces corrélations étant ensuite exploitées afin de reconstruire l'image et d'en améliorer l'échantillonnage.

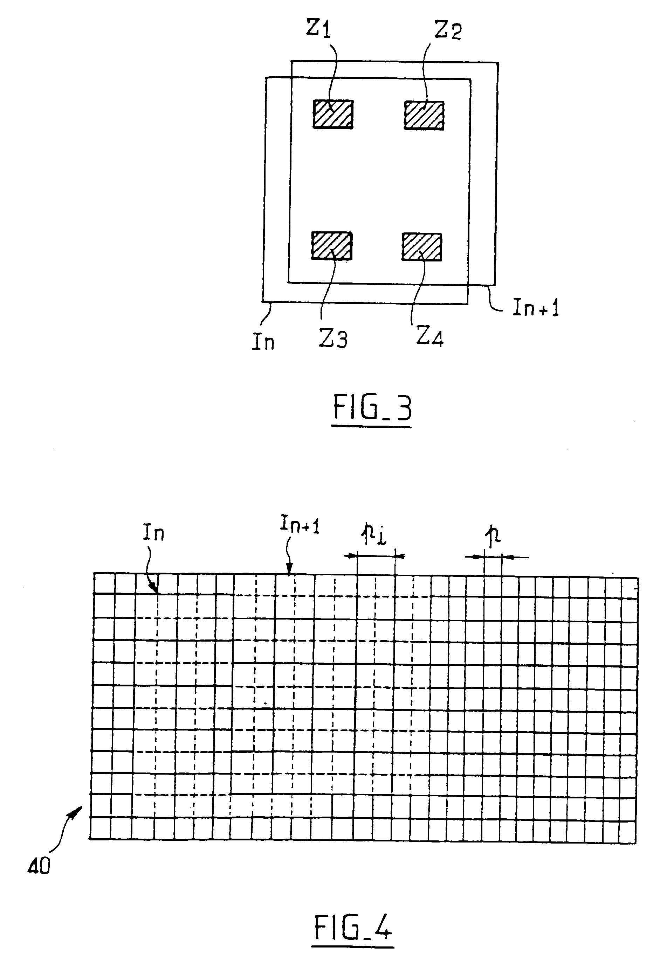

Il est d'abord effectué une corrélation bidimensionnelle entre deux images élémentaires successives, telle qu'illustrée à la figure 3 par un exemple non limitatif. Dans cet exemple de réalisation, quatre zones de corrélation, Z1, Z2, Z3 et Z4, sont utilisées. Ces zones de corrélation sont choisies à l'intérieur de la zone de recouvrement de deux images élémentaires successives, $I_n$ et $I_{n+1}$. Il est utile de définir les zones de corrélation à l'intérieur de la zone de recouvrement avec une marge suffisante, compte tenu du résidu de stabilisation des images. L'utilisation d'au moins quatre zones de corrélation permet avantageusement de déterminer d'éventuelles rotations entre images élémentaires successives.

Le calcul de corrélation, effectué à l'aide d'un processeur associé à une mémoire d'image élémentaire, détermine le déplacement de l'image élémentaire $I_{n+1}$ par rapport à l'image précédente $I_n$ ou par rapport à une image de référence. Le calcul localise les zones de recouvrement de même niveau de luminance dans chaque image élémentaire à corréler. La variation de localisation de ces zones de recouvrement détermine le déplacement relatif des images élémentaires successives.

La détermination de ce déplacement permet alors de recaler spatialement les points-image dans une mémoire de bandeau d'image reconstruit. La détermination du déplacement est d'autant précise que le taux de recouvrement entre images élémentaires successives est élevé.

Une telle mémoire de bandeau est présentée en figure 4. Pour tirer profit de l'effet de sur-échantillonnage de l'image lorsqu'une matrice a haute cadence est utilisée, la mémoire de bandeau 40 possède un pas de mémoire élémentaire p égal à une fraction du pas de point image $p_l$ de chaque image élémentaire $I_n$ ou $I_{n+1}$, par exemple égal à sa moitié. Les valeurs de luminance successivement contenues dans la mémoire d'image élémentaire, proportionnelles à l'intensité lumineuse reçue par les capteurs élémentaires, sont transmises dans les zones élémentaires de la mémoire de bandeau, en tenant compte du décalage déterminé par le processeur de corrélation entre images élémentaires.

Cette méthode de reconstruction selon l'invention est appliquée en faisant avantageusement intervenir les moyens de traitement numérique d'image, à savoir :

- interpolation des points-image des images élémentaires, pour adresser les valeurs de luminance dans les zones mémoire correspondantes de la mémoire de bandeau,
- filtrage numérique bidirectionnel et anti-repliement,
- accumulation par sommation des valeurs de luminance successivement intégrées dans chaque zone de la mémoire de bandeau.

Par le biais de cette dernière opération, il apparaît une amélioration sensible du rapport signal sur bruit, traduisant le profit tiré de l'exploitation du fort taux de recouvrement des images élémentaires telles qu'utilisées par l'invention.

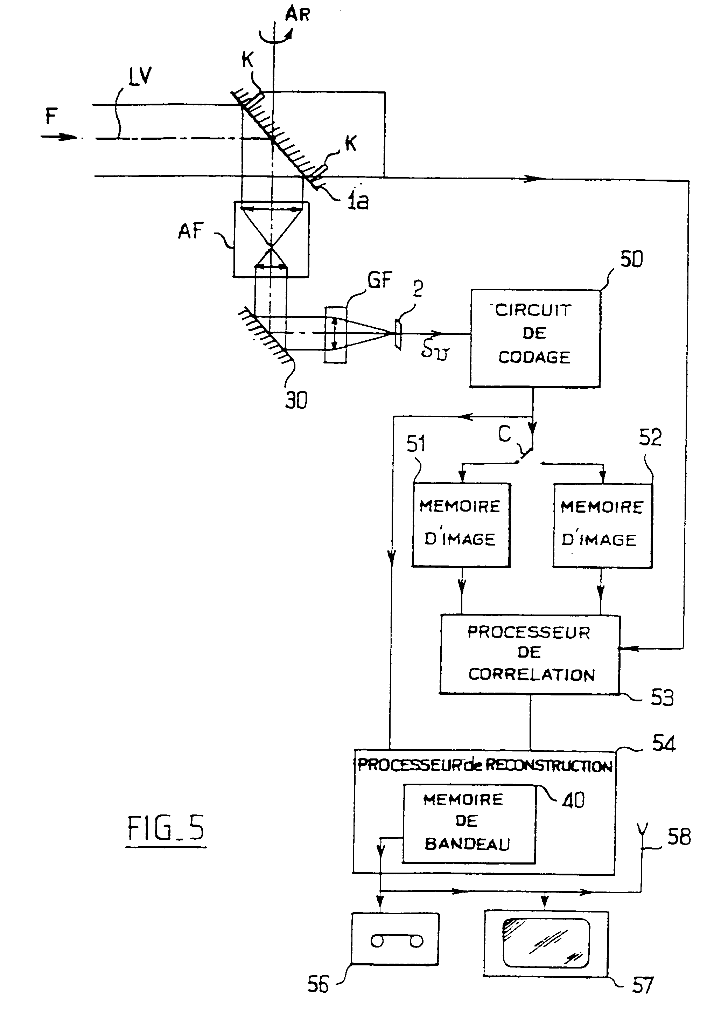

La figure 5 reprend, sous forme de schéma synoptique, l'ensemble des moyens mettant en oeuvre l'exemple de réalisation d'un dispositif selon l'invention. Les éléments déjà décrits sont représentés sur cette figure avec les mêmes signes de référence. La ligne de visée LV est définie à partir de l'oscillation du miroir de stabilisation et de balayage principal 1a associé au miroir de balayage compensateur 30, mobile respectivement autour de l'axe roulis AR de l'aéronef et d'un axe perpendiculaire à l'axe AR. L'axe de rotation du miroir de balayage compensateur 30 est dans le plan de la figure, la rotation de ce miroir entraînant celle de la ligne de visée LV autour de l'axe roulis AR. Les images élémentaires sont formées sur la matrice de détection 2 par projection du faisceau de lumière incident F dans la direction de la ligne de visée LV à travers un groupe optique à focal AF (éventuellement associé à un groupe optique frontal non représenté) conjugué à un groupe optique de focalisation GF. La matrice de détection 2 délivre un signal vidéo $S_v$ à un circuit de mise en forme et de codage numérique 50. Ce circuit fournit des valeurs de luminance d'une image élémentaire à une mémoire d'image 51, après avoir fourni les valeurs de luminance de l'image élémentaire précédente à une autre mémoire d'image 52. Une porte de commutation C permet d'intégrer successivement les valeurs de luminance dans l'une ou l'autre des mémoires d'image. Ces valeurs de luminance sont fournies au processeur de corrélation 53 qui délivre, selon le procédé décrit plus haut, un signal de décalage de l'image élémentaire courante par rapport à l'image élémentaire précédente au processeur de reconstruction d'image 54.

Par ailleurs, les valeurs de luminance des images élémentaires courantes issues du circuit 50, sont directement appliquées au processeur de reconstruction d'images 54 comprenant la mémoire de bandeau d'images 40. Le processeur de reconstruction d'images recale les images élémentaires dans la mémoire de bandeau d'image en fonction des valeurs de décalage fournies par le processeur de corrélation 53 et des valeurs de luminance fournies par le circuit 50. Sortis de la mémoire de bandeau d'image 40, les signaux sont délivrés pour être enregistrés sous forme numérique dans un dispositif d'enregistrement 56, ou visualisés sur un moniteur 57 de standard compatible, ou bien encore émis par une antenne 58 vers une station située au sol.

Un séquenceur (non représenté) gère classiquement les temps de pose synchrone des capteurs élémentaires, les temps d'intégration des charges de ces capteurs, et les temps d'intégration et de passage des informations entres les différents composants du traitement postérieur.

Selon une variante de réalisation, et afin de limiter le volume des calculs opérés par le processeur de corrélation 53, des capteurs angulaires K situés sur le miroir de stabilisation du balayage principal 1a fournissent une information de positionnement au processeur de corrélation 53. Ce processeur utilise ces informations pour prépositionner l'image élémentaire courante par rapport à l'image précédente en ne calculant que la nappe de corrélation dont les dimensions sont celles du résidu de stabilisation.

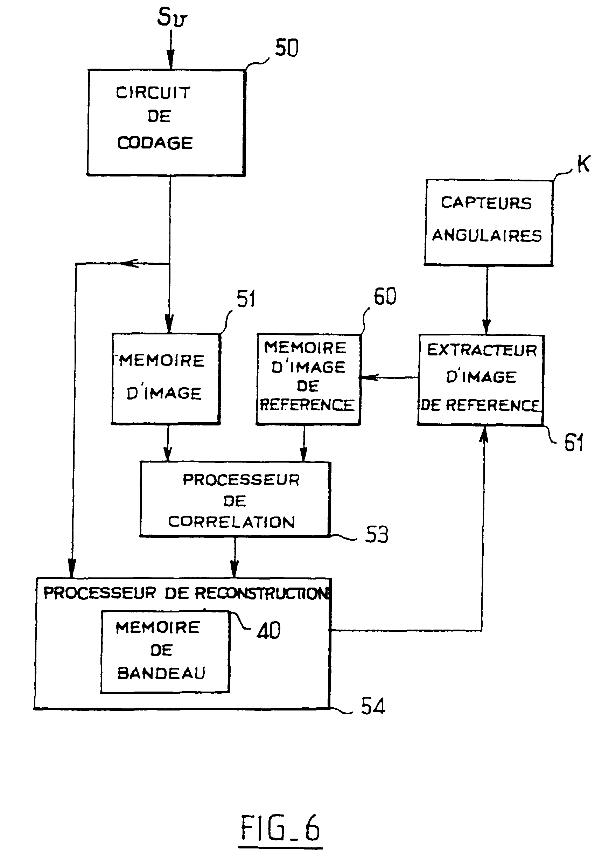

Selon une autre variante illustrée à la figure 6, l'image élémentaire courante est comparée à une image de référence, extraite de la mémoire de bandeau d'images 40 à partir de toutes les images élémentaires précédentes et mémorisée dans une mémoire d'image de référence 60. L'image de référence est obtenue en extrayant de la mémoire de bandeau des valeurs moyennes de luminance, et ces valeurs sont intégrées dans un extracteur 61. Les valeurs intégrées dans la mémoire d'images de référence 60 sont alors obtenues avec une position fournie par les capteurs angulaires K. On obtient ainsi des valeurs de corrélation plus précises car l'image de référence bénéficie du sur-échantillonnage fourni par les images élémentaires précédentes.

L'invention n'est pas limitée aux exemples de réalisation décrits et représentés. Il est par exemple possible d'utiliser un seul processeur central de puissance adaptée pour effectuer la corrélation et la reconstruction d'images. Il est également possible d'utiliser deux gyroscopes, afin de donner un positionnement de l'image élémentaire courante au traitement numérique de corrélation, ou d'utiliser des capteurs angulaires suffisamment précis pour fournir directement la position de l'image élémentaire courante. Dans ce dernier cas, il est alors possible de supprimer le processeur de corrélation en transmettant les données directement au processeur de reconstruction.

**Revendications**

1. Procédé de reconnaissance air/sol pour équipement optronique muni d'une matrice de détection haute cadence à capteurs élémentaires sensibles dans le spectre infrarouge et fournissant des valeurs de luminance d'une zone d'observation au sol par un balayage panoramique de la zone en bandeaux aller et retour, caractérisé en ce qu'il consiste à effectuer une corrélation bidimensionnelle de décalage d'image élémentaire par localisation de zones de recouvrement (Z1, Z2, Z3, Z4) de même niveau de luminance dans des images élémentaires successives ($I_n$, $I_{n+1}$) fournies par un balayage panoramique de cette matrice, à stocker successivement ces corrélations d'image élémentaire, et à positionner les valeurs de luminance de chaque image élémentaire corrélée dans une mémoire de bandeau d'images (40), cette mémoire de bandeau possédant un pas de mémoire élémentaire (p) égal à une fraction du pas de point-image ($p_I$) de chaque image élémentaire.

2. Procédé de reconnaissance air/sol pour équipement optronique selon la revendication 1, caractérisé en ce que le nombre de zones de recouvrement est au moins égal à 4, en ce que le pas de mémoire élémentaire (p) est égal à la moitié du pas de point-image ($p_I$) de chaque image élémentaire, et en ce que les valeurs de luminance adressées à une même zone de la mémoire de bandeau sont accumulées par sommation successive.

3. Dispositif de reconnaissance air/sol de mise en oeuvre du procédé selon la revendication 1 ou 2 par un balayage panoramique de la zone en bandeaux aller et retour suivant une ligne de visée (LV) définie à partir de l'oscillation d'un miroir de stabilisation et de balayage principal (1a), caractérisé en ce que des images élémentaires sont formées sur la matrice de détection (2) par projection d'un faisceau de lumière incident (F) dans la direction de la ligne de visée (LV) à travers un système optique (AF, GF), en ce que la matrice de détection (2) délivre un signal vidéo ($S_v$) à un circuit numérique (50) pour fournir des valeurs de luminance d'une image élémentaire courante ($I_{n+1}$, $I_n$) à au moins une mémoire d'image (51, 52), en ce que les valeurs de luminance de l'image élémentaire sont fournies à un processeur de corrélation (53) qui délivre un signal de décalage de l'image élémentaire courante ($I_{n+1}$, $I_n$) pour la localisation des zones de recouvrement à un processeur de reconstruction d'image (54) auquel sont également transmises les valeurs de luminance des images élémentaires courantes issues du circuit (50), et en ce que le processeur de reconstruction (54) comprend une mémoire de bandeau d'image (40) dans laquelle les images élémentaires sont positionnées en fonction des valeurs de décalage fournies par le processeur de corrélation (53) et des valeurs de luminance fournies par le circuit (50), cette mémoire de bandeau (40) possédant un pas de mémoire élémentaire (P) égal à une fraction du pas de point-image ($P_1$) de chaque image élémentaire.

4. Dispositif de reconnaissance air/sol pour équipement optronique selon la revendication 3, caractérisé en ce qu'un dispositif de stabilisation (3) de la ligne de visée (LV) asservit la position du miroir de balayage (1a) selon deux axes orthogonaux en maintenant constant le signal de sortie d'un gyromètre (5) solidaire de la matrice (2) pour compenser l'avancement de l'aéronef en maintenant les images élémentaires ($I_1$, $I_2$, $I_3$,.., $I_n$) projetées perpendiculaires à la trajectoire de l'aéronef.

5. Dispositif de reconnaissance air/sol pour équipement optronique selon la revendication 4, caractérisé en ce que le miroir principal (1a) est associé à un miroir de balayage compensateur (30), dont l'effet s'ajoute ou s'oppose à celui dû à ce miroir principal, le balayage compensateur présentant une phase périodiquement opposée au balayage principal pendant au moins une période égale au temps de pose de prise de vue de chaque image élémentaire.

6. Dispositif de reconnaissance air/sol pour équipement optronique selon la revendication 5, caractérisé en ce que le temps de pose pendant lequel les capteurs élémentaires de la matrice de détection (2) sont exposés sous forme de points-image afin de former une image élémentaire, est synchrone pour tous les points-image.

7. Dispositif de reconnaissance air/sol pour équipement optronique selon la revendication 5, caractérisé en ce que les valeurs de luminance de deux images élémentaires successives ($I_n$, $I_{n+1}$) sont fournies à deux mémoires d'image (51, 52), ces valeurs de luminance étant ensuite transmises au processeur de corrélation (53) pour déterminer le décalage d'une image élémentaire ($I_{n+1}$) par rapport à l'image élémentaire précédente ($I_n$).

8. Dispositif de reconnaissance air/sol pour équipement optronique selon la revendication 5, caractérisé en ce que des capteurs angulaires (K) situés sur le miroir de stabilisation du balayage principal (1a) fournissent une information de positionnement au processeur de corrélation (53) pour prépositionner l'image élémentaire courante ($I_{n+1}$) par rapport à l'image précédente ($I_n$) en ne calculant que la nappe de corrélation de dimension correspondant à celle du résidu de stabilisation.

9. Dispositif de reconnaissance air/sol pour équipement optronique selon la revendication 5, caractérisé en ce que l'image élémentaire courante ($I_{n+1}$) est comparée à une image de référence extraite de la mémoire de bandeau (40) par moyennage des valeurs de luminance de toutes les images élémentaires précédentes et mémorisation dans une image de référence (60) après avoir été intégrées dans un extracteur (61) qui reçoit également une information de positionnement approximative fournie par des capteurs angulaires (K) situés sur le miroir de stabilisation du balayage principal (1a).

10. Dispositif de reconnaissance air/sol pour équipement optronique selon la revendication 3, caractérisé en ce que les capteurs (K) sont suffisamment précis pour fournir directement la position de l'image élémentaire courante ($I_{n+1}$) au processeur de reconstruction (54) sans passer par le processeur de corrélation (53).

11. Dispositif de reconnaissance air/sol pour équipement optronique selon l'une quelconque des revendications précédentes, caractérisé en ce que la mémoire de bandeau d'image (40) délivre des signaux enregistrés sous forme numérique dans un dispositif d'enregistrement (56), visualisés sur un moniteur (57) de standard compatible, ou émis par une antenne (58) vers une station située au sol.

**Patentansprüche**

1. Verfahren zur Erkundung des Erdbodens aus der Luft für eine optronische Einrichtung, die eine Detektormatrix hoher Arbeitsgeschwindigkeit mit im Infrarot-Spektrum empfindlichen Elementarsonden enthält und Helligkeitswerte in einer Beobachtungszone am Boden durch eine panorama-artige Abtastung der Zone in Bändern hin und zurück liefert, dadurch gekennzeichnet, daß es darin besteht, eine zweidimensionale Korrelation der Elementarbildverschiebung durch Lokalisierung von Überlappungszonen (Z1, Z2, Z3, Z4) gleichen Helligkeitsniveaus in aufeinanderfolgenden Elementarbildern ($I_n$, $I_{n+1}$) durchzuführen, die bei einer panoramaartigen Abtastung dieser Matrix geliefert werden, nacheinander diese Korrelationen von Elementarbildern zu speichern und die Helligkeitswerte jedes korrelierten Elementarbilds in einem Speicher (40) für ein Band von Bildern zu positionieren, der einen elementaren Speicherschritt (p) gleich einem Bruchteil des Schrittabstands ($p_i$) der Bildpunkte jedes Elementarbilds besitzt.

2. Verfahren zur Erkundung des Bodens aus der Luft für eine optronische Einrichtung nach Anspruch 1, dadurch gekennzeichnet, daß die Anzahl von Überlappungszonen mindestens vier beträgt, daß der elementare Speicherschritt (p) dem halben Schrittabstand der Bildpunkte ($p_i$) jedes Elementarbilds gleicht und daß die an eine gegebene Zone des Bandspeichers adressierten Helligkeitswerte durch aufeinanderfolgende Summierung akkumuliert werden.

3. Vorrichtung zur Erkundung des Erdbodens aus der Luft zur Durchführung des Verfahrens nach Anspruch 1 oder 2 durch panorama-artige Abtastung der Zone in Bändern hin und zurück gemäß einer Aufnahmeachse (LV), die ausgehend von der Oszillation eines Spiegels (1a) zur Stabilisierung und zur Hauptabtastung definiert ist, dadurch gekennzeichnet, daß Elementarbilder auf der Detektormatrix (2) durch Projektion eines in Richtung der Aufnahmeachse (LV) ankommenden Lichtbündels (F) durch ein optisches System (AF, GF) gebildet werden, daß die Detektormatrix (2) ein Videosignal ($S_v$) an eine digitale Schaltung (50) liefert, die Helligkeitswerte eines laufenden Elementarbilds ($I_{n+1}$, $I_n$) an mindestens einen Bildspeicher (51, 52) überträgt, daß die Helligkeitswerte des Elementarbilds an einen Korrelationsprozessor (53) geliefert werden, der ein Signal zur Verschiebung des laufenden Elementarbilds ($I_{n+1}$, $I_n$) für die Lokalisierung der Überlappungszonen an einen Prozessor (54) zur Bildrekonstruktion liefert, welcher außerdem die Helligkeitswerte der laufenden Elementarbilder aus der Schaltung (50) empfängt, und daß der Prozessor (54) zur Bildrekonstruktion einen Speicher (40) für ein Bildband enthält, in dem die Elementarbilder abhängig von den Werten der Verschiebung, die vom Korrelationsprozessor (53) geliefert werden, und von den Helligkeitswerten positioniert werden, die von der digitalen Schaltung (50) stammen, wobei dieser Bandspeicher (40) einen elementaren Speicherschritt (P) gleich einem Bruchteil des Einheitsabstands der Bildpunkte ($P_1$) jedes Elementarbilds besitzt.

4. Vorrichtung zur Erkundung des Erdbodens aus der Luft für eine optronische Einrichtung nach Anspruch 3, dadurch gekennzeichnet, daß eine Vorrichtung (3) zur Stabilisierung der Aufnahmeachse (LV) die Lage des Abtastspiegels (1a) gemäß zwei zueinander senkrechten Achsen nachregelt, indem das Ausgangssignal eines mit der Matrix (2) fest verbundenen Gyrometers (5) konstant gehalten wird, um die Vorwärtsbewegung des Flugkörpers zu kompensieren und die projizierten Elementarbilder ($I_1$, $I_2$, $I_3$,...,$I_n$) senkrecht zur Flugbahn des Flugkörpers zu halten.

5. Vorrichtung zur Erkundung des Erdbodens aus der Luft für eine optronische Einrichtung nach Anspruch 4, dadurch gekennzeichnet, daß der Hauptspiegel (1a) mit einem Kompensations-Abtastspiegel (30) kombiniert ist, dessen Wirkung der des Hauptspiegels hinzugefügt wird oder von ihr abgezogen wird, wobei die Kompensationsabtastung eine Phase besitzt, die periodisch der Hauptabtastung während mindestens einer Periode gleich der Zeit für die Bildaufnahme jedes Elementarbilds entgegengesetzt ist.

6. Vorrichtung zur Erkundung des Erdbodens aus der Luft für eine optronische Einrichtung nach Anspruch 5, dadurch gekennzeichnet, daß die Bildaufnahmezeit, während der die Elementarsonden der Detektormatrix Licht in Form von Bildpunkten aufnehmen, um ein Elementarbild zu erzeugen, für alle Bildpunkte synchron ist.

7. Vorrichtung zur Erkundung des Erdbodens aus der Luft für eine optronische Einrichtung nach Anspruch 5, dadurch gekennzeichnet, daß die Helligkeitswerte zweier aufeinanderfolgender Elementarbilder ($I_n$, $I_{n+1}$) an zwei Bildspeicher (51, 52) geliefert werden und dann an den Korrelationsprozessor (53) gelangen, um die Verschiebung eines Elementarbilds ($I_{n+1}$) bezüglich des vorhergegangenen Elementarbilds ($I_n$) zu bestimmen.

8. Vorrichtung zur Erkundung des Erdbodens aus der Luft für eine optronische Einrichtung nach Anspruch 5, dadurch gekennzeichnet, daß Winkelmeßsonden (K), die auf dem Spiegel (1a) zur Stabilisierung und zur Hauptabtastung sitzen, eine Information über die Lage an den Korrelationsprozessor (53) liefern, um das laufende Elementarbild ($I_{n+1}$) bezüglich des vorhergehenden Elementarbilds ($I_n$) zu positionieren, indem nur die Korrelationsschicht einer Dimension berechnet wird, die der des Stabilisierungsrests entspricht.

9. Vorrichtung zur Erkundung des Erdbodens aus der Luft für eine optronische Einrichtung nach Anspruch 5, dadurch gekennzeichnet, daß das laufende Elementarbild ($I_{n+1}$) mit einem Bezugsbild verglichen wird, das aus dem Bandspeicher (40) durch Ausmittelung der Helligkeitswerte aller vorhergegangener Elementarbilder und durch Speicherung in einem Bezugsbildspeicher (60) nach ihrer Integration in einem Extrahierorgan (61) gebildet wurde, der außerdem eine Information über die ungefähre Lage von Winkelmeßsonden (K) empfängt, die sich auf dem Spiegel (1a) zur Stabilisierung und zur Hauabtastung befinden.

10. Vorrichtung zur Erkundung des Erdbodens aus der Luft für eine optronische Einrichtung nach Anspruch 3, dadurch gekennzeichnet, daß die Sonden (K) genau genug sind, um unmittelbar die Lage des laufenden Elementarbilds ($I_{n+1}$) an den Rekonstruktionsprozessor (54) ohne den Umweg über den Korrelationsprozessor (53) zu liefern.

11. Vorrichtung zur Erkundung des Erdbodens aus der Luft für eine optronische Einrichtung nach einem beliebigen der vorstehenden Ansprüche, dadurch gekennzeichnet, daß der Bildbandspeicher (40) Signale liefert, die in digitaler Form in einer Aufzeichnungsvorrichtung (56) aufgezeichnet werden, auf einem Bildschirm (57) mit geeigneter Norm sichtbar gemacht werden oder über eine Antenne (58) an eine Bodenstation ausgesendet werden.

**Claims**

1. Method of air-to-ground reconnaissance for optronic equipment fitted with a high-speed detection matrix having elementary sensors which are sensitive in the infra-red spectrum and supply values of luminance of an observation area on the ground by panoramic scanning of the area in outward and return patches, characterised in that it consists in performing a two-dimensional correlation of elementary image offset by pinpointing areas of overlap (Z1, Z2, Z3, Z4) of like luminance level in successive elementary images ($I_n$, $I_{n+1}$) supplied by a panoramic scanning of this matrix, in storing these elementary-image correlations in succession, and in positioning the luminance values of each correlated elementary image in an images patch memory (40), this patch memory possessing an elementary memory spacing (p) equal to a fraction of the image-point spacing ($p_I$) of each elementary image.

2. Air-ground reconnaissance method for optronic equipment according to claim 1, characterised in that the number of overlap areas is at least equal to 4, in that the elementary memory spacing (p) is equal to half the image-point spacing ($p_I$) of each elementary image, and in that the luminance values addressed to one and the same area of the patch memory are accumulated by successive summation.

3. Device for air-to-ground reconnaissance for implementing the method according to claim 1 or 2 by a panoramic scanning of the area in outward and return patches along a line of sight (LV) defined on the basis of the oscillation of a stabilising and main scanning mirror (1a), characterised in that elementary images are formed on the detection matrix (2) by projection of an incident light beam (F) in the direction of the line of sight (LV) through an optical system (AF, GF), in that the detection matrix (2) delivers a video signal ($S_v$) to a digital circuit (50) so as to supply luminance values of a current elementary image ($I_{n+1}$, $I_n$) to at least one image memory (51, 52), in that the luminance values of the elementary image are supplied to a correlation processor (53) which delivers an offset signal for the current elementary image ($I_{n+1}$, $I_n$) for pinpointing overlap

areas to an image reconstruction processor (54) to which are also transmitted the luminance values of the current elementary images emanating from the circuit (50), and in that the reconstruction processor (54) comprises an image patch memory (40) in which the elementary images are positioned as a function of the offset values supplied by the correlation processor (53) and of the luminance values supplied by the circuit (50), this patch memory (40) possessing an elementary memory spacing (P) equal to a fraction of the point-image spacing ($P_1$) of each elementary image.

4. Air-to-ground reconnaissance device for optronic equipment according to claim 3, characterised in that a device (3) for stabilising the line of sight (LV) slaves the position of the scanning mirror (1a) according to two orthogonal axes by maintaining the output signal from a rate gyro (5) fixed on the matrix (2) constant so as to compensate for the forward motion of the aircraft, maintaining the elementary images ($I_1$, $I_2$, $I_3$, ..., $I_n$) projected perpendicularly to the path of the aircraft.

5. Air-to-ground reconnaissance device for optronic equipment according to claim 4, characterised in that the main mirror (la) is associated with a compensating scanning mirror (30), the effect of which adds to or opposes that due to this main mirror, the compensating scan having a phase periodically opposed to the main scan during at least a period equal to the snapshot exposure time of each elementary image.

6. Air-to-ground reconnaissance device for optronic equipment according to claim 5, characterised in that the exposure time during which the elementary sensors of the detection matrix (2) are exposed in the form of image-points so as to form an elementary image, is synchronous for all the image-points.

7. Air-to-ground reconnaissance device for optronic equipment according to claim 5, characterised in that the luminance values of two successive elementary images ($I_n$, $I_{n+1}$) are supplied to two image memories (51, 52), these luminance values next being transmitted to the correlation processor (53) so as to determine the offset of one elementary image ($I_{n+1}$) with respect to the previous elementary image ($I_n$).

8. Air-to-ground reconnaissance device for optronic equipment according to claim 5, characterised in that angular sensors (K) situated on the main scan stabilising mirror (la) supply a positioning cue to the correlation processor (53) so as to preposition the current elementary image ($I_{n+1}$) with respect to the previous image ($I_n$) while calculating only the correlation sheet of dimension corresponding to that of the stabilisation residual.

9. Air-to-ground reconnaissance device for optronic equipment according to claim 5, characterised in that the current elementary image ($I_{n+1}$) is compared with a reference image extracted from the patch memory (40) by averaging of the luminance values of all the previous elementary images and storage in a reference image (60) after having been integrated in an extractor (61) which also receives an approximate positioning cue supplied by angular sensors (K) situated on the main scan stabilising mirror (1a).

10. Air-to-ground reconnaissance device for optronic equipment according to claim 3, characterised in that the sensors (K) are sufficiently accurate to supply the position of the current elementary image ($I_{n+1}$) directly to the reconstruction processor (54) without passing through the correlation processor (53).

11. Air-to-ground reconnaissance device for optronic equipment according to any one of the preceding claims, characterised in that the image patch memory (40) delivers signals which are recorded in digital form in a recording device (56), are displayed on a monitor (57) of compatible standard, or are transmitted by an antenna (58) to a station situated on the ground.

FIG_1

FIG_2

FIG_3

FIG_4

FIG_5

Sʋ

50

CIRCUIT
DE
CODAGE

K

CAPTEURS
ANGULAIRES

51

MEMOIRE
D'IMAGE

60

MEMOIRE
D'IMAGE
DE
REFERENCE

EXTRACTEUR
D'IMAGE
DE REFERENCE

61

PROCESSEUR
DE
CORRELATION

53

PROCESSEUR DE RECONSTRUCTION

MEMOIRE
DE
BANDEAU

40

54

FIG_6